# EUROPEAN PATENT APPLICATION

(11) **EP 4 485 896 A1**
(43) Date of publication of application: **01.01.2025**
(21) Application number: 23778035.8
(22) Date of filing: 24.03.2023
(51) Int. Cl.: H04L 49/10

(54) **SWITCH FABRIC UNIT, DATA FORWARDING METHOD, SWITCHING FRAME, AND NETWORK SYSTEM**

(30) Priority: 30.03.2022 CN 202210327164; 14.06.2022 CN 202210674598
(71) Applicant: Huawei Technologies Co., Ltd., Shenzhen, Guangdong 518129 (CN)
(72) Inventor: WANG, Fujiang, Shenzhen, Guangdong 518129 (CN); WANG, Lianqiang, Shenzhen, Guangdong 518129 (CN); DU, Anxue, Shenzhen, Guangdong 518129 (CN)
(74) Representative: Pfenning, Meinig & Partner mbB
(86) International application number: PCT/CN2023/083609
(87) International publication number: WO 2023/185666

(57) **Abstract**

This application discloses a switching fabric board, a data forwarding method, a switching subrack, and a network system, and belongs to the communication field. The switching fabric board is a first switching fabric board connected to a first network device. The first switching fabric board includes a first connector and a first communication module. The first connector is connected to the first communication module based on a first signal cable. The first communication module is further configured to connect to a second communication module, the second communication module is connected to a first switching chip, the first switching chip has a data forwarding capability, and the second communication module and the first switching chip are configured on a second switching fabric board connected to a second network device. According to the switching fabric board provided in this application, the first connector may be connected to the first communication module based on the first signal cable, so that cabling density on the switching fabric board is effectively controlled, and costs of the switching fabric board are reduced. An indirect connection to the first switching chip having the data forwarding capability is implemented by using the second communication module, so that a forwarding capability of the first communication module is ensured, and a data forwarding requirement is met.

## Description

This application claims priority to Chinese Patent Application No. 202210327164.X, filed on March 30, 2022 and entitled "CONNECTING METHOD AND CLUSTER SYSTEM", and claims priority to Chinese Patent Application No. 202210674598.7, filed on June 14, 2022 and entitled "SWITCHING FABRIC BOARD, DATA FORWARDING METHOD, SWITCHING SUBRACK, AND NETWORK SYSTEM", both of which are incorporated herein by reference in their entireties.

### TECHNICAL FIELD

This application relates to the communication field, and in particular, to a switching fabric board, a data forwarding method, a switching subrack, and a network system.

### BACKGROUND

With development of communication technologies, more data needs to be forwarded by a network device like a router on a network. Because it is difficult for a single network device to meet a data forwarding requirement, a device cluster may be obtained by cascading a plurality of network devices, and is configured to forward data. A connection between the network devices in the device cluster is implemented through a switching fabric board.

### SUMMARY

This application provides a switching fabric board, a data forwarding method, a switching subrack, and a network system, to effectively control cabling density on the switching fabric board and meet a data forwarding requirement of the switching fabric board. Technical solutions are as follows.

According to a first aspect, a switching fabric board is provided. The switching fabric board is a first switching fabric board connected to a first network device. The first switching fabric board includes a first connector and a first communication module. The first connector is connected to the first communication module based on a first signal cable. The first communication module is further configured to connect to a second communication module, the second communication module is connected to a first switching chip, the first switching chip has a data forwarding capability, and the second communication module and the first switching chip are configured on a second switching fabric board connected to a second network device. That the first connector and the first communication module are connected based on the first signal cable may be that the first connector and the first communication module are directly connected based on the first signal cable, or indirectly connected based on the first signal cable. However, no matter how the first connector and the first communication module are connected, there is no switching chip having a data forwarding capability between the first connector and the first communication module, that is, there is no switching chip supporting a switching network forwarding protocol.

According to the switching fabric board provided in this application, the first connector is connected to the first communication module based on the first signal cable. Compared with a manner in which a switching chip having a data forwarding capability is connected between the first connector and the first communication module, this effectively controls cabling density on the switching fabric board, and reduces costs of the switching fabric board. In addition, the first communication module is connected to the second communication module. Because the second communication module is connected to the first switching chip having the data forwarding capability, a forwarding capability of the first communication module on the switching fabric board is ensured, and a data forwarding requirement of the switching fabric board is met.

In a possible implementation, the first switching fabric board and the second switching fabric board are a same switching fabric board. The first switching fabric board and the second switching fabric board are a same switching fabric board, that is, the first switching fabric board has both the first communication module that is not directly connected to the first switching chip and the second communication module that is directly connected to the first switching chip. When a same switching fabric board has a data forwarding capability, the communication module has various connection manners and high flexibility.

In a possible implementation, the first switching fabric board further includes a second connector, and the second connector is connected to the first switching chip. The second connector is connected to the first switching chip, and the second connector configured on the first switching fabric board may be connected to a fabric board or a device other than the first switching fabric board, so that a data forwarding link structure of the first switching chip is more complete, and an application scope of the first switching fabric board is expanded.

In a possible implementation, the first switching fabric board and the second switching fabric board are different switching fabric boards. Data forwarding of the first communication module on the first switching fabric board is implemented by using the first switching chip on the second switching fabric board, so that data forwarding costs are reduced.

In a possible implementation, the first switching fabric board further includes a first forwarding module, the first connector is connected to the first forwarding module, and the first forwarding module is further connected to the first communication module based on the first signal cable. The first forwarding module may be further configured between the first connector and the first communication module, to implement an indirect connection based on the first signal cable. The first connector and the first communication module are connected in more diversified manners. In addition, the first forwarding module includes but is not limited to a driver, or is a chip having forwarding and cross-connection functions.

In a possible implementation, the first switching fabric board further includes a second switching chip and a third communication module, and the second switching chip has a data forwarding capability. The second switching chip is connected to the third communication module based on a second signal cable. The third communication module is further configured to connect to a fourth communication module, the fourth communication module is connected to a third connector, and the fourth communication module and the third connector are configured on a third switching fabric board connected to a third network device.

The second switching chip is further configured on the first switching fabric board. In addition to the first communication module and the second communication module, the first switching fabric board may further include the third communication module that is on the first switching fabric board and that is connected to the second switching chip. The third communication module is connected to the fourth communication module that is on the third switching fabric board and that is connected to the third connector, so that the first switching fabric board has a more diversified structure, is applicable to requirements in different scenarios, and has higher universality.

In a possible implementation, the third communication module is connected to the fourth communication module based on an optical fiber or a cable. A connection manner between the third communication module and the fourth communication module is not limited, and is high in flexibility. Different connection manners may be applicable to different application scenarios.

In a possible implementation, the first switching fabric board further includes a fourth connector, and the fourth connector is connected to the second switching chip based on a third signal cable. The fourth connector is connected to the second switching chip, so that a data forwarding link structure of the second switching chip is more complete. The fourth connector may be connected to another fabric board or device, so that applicability is improved.

In a possible implementation, the first switching fabric board further includes a second forwarding module, the fourth connector is connected to the second forwarding module, and the second forwarding module is connected to the second switching chip based on the third signal cable. A second forwarding module may be further configured between the fourth connector and the second switching chip, to implement an indirect connection based on the third signal cable. The fourth connector and the second switching chip are connected in more diversified manners.

In a possible implementation, the first communication module is connected to the second communication module based on an optical fiber or a cable. A connection manner between the first communication module and the second communication module is not limited, and is high in flexibility.

According to a second aspect, a data forwarding method is provided, where the method is applied to any switching fabric board according to the first aspect, and the method includes: receiving first data by using a first connector, where the first connector is configured to connect to a first service fabric board; sending, by using the first connector, the first data to a first communication module based on a first signal cable; and sending the first data to a second communication module by using the first communication module, where the second communication module is configured to send the first data to a first switching chip, and the first switching chip has a data forwarding capability.

According to the technical solution provided in this application, after receiving the first data sent by the first connector, the first communication module sends the first data to the second communication module, and then sends the first data to the first switching chip having a data forwarding capability by using the second communication module. Because the first switching chip has the data forwarding capability, the first data may be forwarded based on the first switching chip, and the first data needs to be forwarded only once by the first switching chip. Therefore, a quantity of forwarding times is small, forwarding time is short, and efficiency is high.

In a possible implementation, after the sending the first data to a second communication module by using the first communication module, the method further includes: sending the first data to the first switching chip by using the second communication module; and forwarding the first data to a second connector by using the first switching chip, where the second connector is configured to connect to a second service fabric board. When the second switching fabric board and the first switching fabric board are a same switching fabric board, the first switching chip is further configured on the first switching fabric board, and can forward data from the first communication module without being connected to another switching fabric board. Therefore, forwarding costs of the first data are low.

In a possible implementation, the sending, by using the first connector, the first data to a first communication module based on a first signal cable includes: sending the first data to a first forwarding module by using the first connector; and sending, by using the first forwarding module, the first data to the first communication module based on the first signal cable.

In a possible implementation, the method further includes: receiving second data by using a second switching chip; forwarding, by using the second switching chip, the second data to a third communication module based on a second signal cable; and sending the second data to a fourth communication module by using the third communication module, where the fourth communication module is configured to send the second data to a third connector. The second switching chip is further configured on the first switching fabric board. A data forwarding manner of the first switching fabric board may be sending data to the second communication module by using the first communication module, or may be sending data to the fourth communication module by using the third communication module. The first fabric board has more data forwarding links, and has higher universality.

In a possible implementation, the receiving second data by using a second switching chip includes: receiving, by using the second switching chip, the second data that is sent by a fourth connector based on a third signal cable, where the fourth connector is configured to connect to a third service fabric board.

In a possible implementation, the receiving, by using the second switching chip, the second data that is sent by a fourth connector based on a third signal cable includes: receiving the second data sent by the fourth connector by using a third forwarding module; and receiving, by using the second switching chip, the second data that is sent by the third forwarding module based on the third signal cable.

According to a third aspect, a data forwarding apparatus is provided, where the apparatus is used in the switching fabric board according to any implementation of the first aspect, and the apparatus includes:
a receiving module, configured to receive first data by using a first connector, where the first connector is configured to connect to a first service fabric board; and
a sending module, configured to send, by using the first connector, the first data to a first communication module based on a first signal cable, where
the sending module is further configured to send the first data to a second communication module by using the first communication module, where the second communication module is configured to send the first data to a first switching chip, and the first switching chip has a data forwarding capability.

In a possible implementation, the sending module is further configured to send the first data to the first switching chip by using the second communication module; and the apparatus further includes: a first forwarding module, configured to forward the first data to a second connector by using the first switching chip, where the second connector is configured to connect to a second service fabric board.

In a possible implementation, the sending module is configured to: send the first data to the first forwarding module by using the first connector; and send, by using the first forwarding module, the first data to the first communication module based on the first signal cable.

In a possible implementation, the receiving module is further configured to receive second data by using a second switching chip, and the apparatus further includes: a second forwarding module, configured to forward, by using the second switching chip, the second data to a third communication module based on a second signal cable; and the sending module is further configured to send the second data to a fourth communication module by using the third communication module, where the fourth communication module is configured to send the second data to a third connector.

In a possible implementation, the receiving module is configured to receive, by using the second switching chip, the second data that is sent by a fourth connector based on a third signal cable, where the fourth connector is configured to connect to a third service fabric board.

In a possible implementation, the receiving module is configured to: receive the second data sent by the fourth connector by using a third forwarding module; and receive, by using the second switching chip, the second data that is sent by the third forwarding module based on the third signal cable.

According to a fourth aspect, a switching subrack is provided, where the switching subrack includes at least one switching fabric board according to any implementation of the first aspect.

According to a fifth aspect, a network system is provided, where the network system includes at least two network devices, and the at least two fabric board devices are connected through the switching fabric board according to any implementation of the first aspect.

According to a sixth aspect, a data forwarding device is provided, where the device includes a processor, the processor is coupled to a memory, the memory stores at least one instruction, and the at least one instruction is loaded and executed by the processor, so that the data forwarding device implements the data forwarding method according to any implementation of the second aspect.

According to a seventh aspect, another communication apparatus is provided, and the apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform the method according to any one of the second aspect or the possible implementations of the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to an eighth aspect, a chip is provided, including a processor. The processor is configured to invoke and run instructions stored in the memory, to enable a communication device on which the chip is installed to perform the methods in the foregoing aspects.

In a possible implementation, the chip further includes an input interface, an output interface, and a memory. The input interface, the output interface, the processor, and the memory are connected to each other through an internal connection path. The processor is configured to execute code in the memory. When the code is executed, the processor is configured to perform the methods in the foregoing aspects.

According to a ninth aspect, a computer program (product) is provided. The computer program (product) includes computer program code, and when the computer program code is run by a computer, the computer is enabled to perform the methods in the foregoing aspects.

According to a tenth aspect, a computer-readable storage medium is provided. The computer-readable storage medium stores a program or instructions. When the program or the instructions is/are run on a computer, the methods in the foregoing aspects are performed.

It should be understood that, for beneficial effects achieved by the technical solutions in the second aspect to the tenth aspect and the corresponding possible implementations in embodiments of this application, refer to the foregoing technical effects in the first aspect and the corresponding possible implementations. Details are not described herein again.

### BRIEF DESCRIPTION OF DRAWINGS

FIG. 1 is a diagram of a structure of a first switching fabric board according to an embodiment of this application;
FIG. 2 is a diagram of a structure of another first switching fabric board according to an embodiment of this application;
FIG. 3 is a diagram of a device connection according to an embodiment of this application;
FIG. 4 is a diagram of a connection between a first switching fabric board and a second switching fabric board according to an embodiment of this application;
FIG. 5 is a diagram of a connection between another first switching fabric board and a second switching fabric board according to an embodiment of this application;
FIG. 6 is a diagram of a structure of another first switching fabric board according to an embodiment of this application;
FIG. 7A and FIG. 7B are a diagram of a connection between another first switching fabric board and a second switching fabric board according to an embodiment of this application;
FIG. 8 is a diagram of another device connection according to an embodiment of this application;
FIG. 9 is a diagram of a connection between another first switching fabric board and a second switching fabric board according to an embodiment of this application;
FIG. 10 is a diagram of another device connection according to an embodiment of this application;
FIG. 11 is a diagram of a structure of another first switching fabric board according to an embodiment of this application;
FIG. 12 is a flowchart of a data forwarding method according to an embodiment of this appli cati on;
FIG. 13 is a diagram of a data forwarding process according to an embodiment of this application;
FIG. 14 is a diagram of a structure of a data forwarding apparatus according to an embodiment of this application;
FIG. 15 is a diagram of a structure of a network device according to an embodiment of this application; and
FIG. 16 is a diagram of a structure of another network device according to an embodiment of this application.

### DESCRIPTION OF EMBODIMENTS

Terms used in embodiments of this application are only used to explain specific embodiments of this application, but are not intended to limit this application. To make the objectives, technical solutions, and advantages of this application clearer, the following further describes implementations of this application in detail with reference to the accompanying drawings.

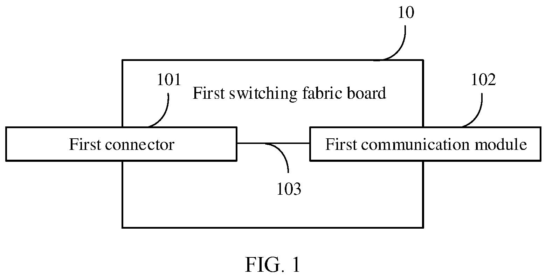

With development of communication technologies, there are more and more application scenarios in which data is forwarded by using a device cluster. The device cluster is obtained by cascading a plurality of network devices, and a connection between the network devices in the device cluster is implemented through a switching fabric board. An embodiment of this application provides a switching fabric board. The switching fabric board is a first switching fabric board 10 connected to a first network device. Refer to FIG. 1. The first switching fabric board 10 includes a first connector 101 and a first communication module 102. The first connector 101 is connected to the first communication module 102 based on a first signal cable 103. The first communication module 102 is configured to connect to a second communication module, the second communication module is connected to a first switching chip, the first switching chip has a data forwarding capability, and the second communication module and the first switching chip are configured on a second switching fabric board connected to a second network device.

Optionally, that the first switching fabric board 10 is connected to the first network device means that the first switching fabric board 10 is connected to a service fabric board on the first network device. The service fabric board is configured to provide a service transmission interface, to receive and send data. How the first switching fabric board 10 is connected to the first network device is not limited in embodiments of this application. The first switching fabric board 10 may be configured on the first network device, and is connected to the first network device based on a connection between a signal cable of the first network device and the service fabric board. For example, the first network device includes a backplane, and the backplane is a component configured to implement interconnection between units in the first network device. The units in the first network device include but are not limited to the first switching fabric board 10, the service fabric board, a fan, a power supply, and the like. The first switching fabric board 10 is connected to the backplane, the service fabric board is connected to the backplane, and the first switching fabric board 10 is connected to the service fabric board based on backplane cabling.

In addition, the first switching fabric board 10 and the backplane may be connected through insertion, welding, or the like. When the first switching fabric board 10 is connected to the backplane, the first switching fabric board 10 and the backplane may be fully mated (mated), in other words, a distance between a connection component of the first switching fabric board 10 and a connection component of the backplane is 0. Alternatively, the first switching fabric board 10 and the backplane may not be fully mated, in other words, there is a distance between a connection component of the first switching fabric board 10 and a connection component of the backplane, but the distance is not greater than an allowed mating gap (demating). The allowed mating gap may be set based on experience.

The foregoing describes, by using an example, a case in which the first switching fabric board 10 is configured on the first network device. In addition, there is a case in which the first switching fabric board 10 is not configured on the first network device. For example, the units in the first network device are connected by using the backplane, which is used as an example above. The first switching fabric board 10 that is not connected to the backplane (not configured on the first network device) is connected to the service fabric board on the first network device based on the signal cable. In this case, the first switching fabric board 10 is still connected to the first network device. In other words, the first switching fabric board 10 connected to the first network device may be configured on the first network device, or may be connected to the first network device in a manner in which the first switching fabric board 10 is not configured on the first network device. This is not limited in embodiments of this application.

In a possible implementation, the first network device is a device configured to forward data, and includes but is not limited to a router, a switch, a server, and the like. The first switching fabric board 10 connected to the first network device includes a printed circuit board (printed circuit board, PCB). Optionally, the first connector 101 configured on the first switching fabric board 10 is configured to receive data transmitted by another fabric board. That the first connector 101 and the first communication module 102 are connected based on the first signal cable 103 may be that the first connector 101 and the first communication module 102 are directly connected based on the first signal cable 103, or indirectly connected based on the first signal cable 103. However, no matter how the first connector 101 is connected to the first communication module 102, there is no switching chip having a data forwarding capability between the first connector 101 and the first communication module 102, that is, there is no switching chip having a switching network forwarding protocol, and a link between the first connector 101 and the first communication module 102 belongs to a passive link.

In addition, the first connector 101 is further configured to connect to the service fabric board, that is, the first connector 101 is further configured to connect to the first network device, and is configured to receive data transmitted by the service fabric board. A quantity of first connectors 101 is not limited in embodiments of this application, and there may be one or more first connectors 101. For example, a quantity of first communication modules 102 configured on the first connector 101 is the same as a quantity of first communication modules 102 configured on the first switching fabric board 10, that is, 4, so that one first communication module 102 is connected to one first connector 101 in a one-to-one correspondence.

Optionally, the first communication module 102 configured on the first switching fabric board 10 is a component configured to connect to the second switching fabric board, and the first communication module 102 varies based on a type of data transmitted on the first switching fabric board 10. For example, the type of the transmitted data is an electrical signal, and the first communication module 102 is a cable. For example, the type of the transmitted data is an optical signal. The first communication module 102 is an optical module, and the optical module is configured to perform conversion between an optical signal and an electrical signal.

In addition, there may be one or more first communication modules 102 on the first switching fabric board 10. A position at which the first communication module 102 is configured on the first switching fabric board 10 is not limited in embodiments of this application. The position may be determined based on experience and an implementation environment, or a size of the first switching fabric board 10, a size of the first communication module 102, a position of another component configured on the first switching fabric board 10, and the like may be determined based on experience and an implementation environment. When a plurality of first communication modules 102 are configured on the first switching fabric board 10, spacings between the plurality of first communication modules 102 may be the same, or spacings between the plurality of first communication modules 102 may be different. The spacings between the plurality of first communication modules 102 are not limited in embodiments of this application.

For example, the second communication module is similar to the first communication module 102. Details are not described herein again. Optionally, a quantity of second communication modules may be the same as that of first communication modules 102. When the quantity of first communication modules 102 is 4, the quantity of second communication modules is also 4. How the first communication module 102 is connected to the second communication module is not limited in embodiments of this application. The first communication module 102 may be connected to the second communication module based on an optical fiber or a cable. For example, when the first communication module 102 and the second communication module are optical modules, the first communication module 102 and the second communication module are connected based on an optical fiber. For another example, when the first communication module 102 and the second communication module are cable modules, the first communication module 102 and the second communication module are connected based on a cable.

No matter how the first communication module 102 is connected to the second communication module, the second communication module may be connected to the first switching chip having the data forwarding capability, to forward, based on the first switching chip, the first data sent by the first communication module 102. Based on different cases in which the first switching chip and the second communication module are located on the second switching fabric board, a network system obtained based on the connection of the first switching fabric board 10 also has the following several different cases.

Case 1: The first switching fabric board 10 and the second switching fabric board are a same switching fabric board.

The case 1 includes two cases: When the first network device and the second network device are a same network device, the first switching fabric board 10 and the second switching fabric board are a same switching fabric board; or when the first network device and the second network device are different network devices, the first switching fabric board 10 and the second switching fabric board are a same switching fabric board. That the first network device and the second network device are different network devices means that the first switching fabric board 10 is further connected to the second network device in addition to being connected to the first network device.

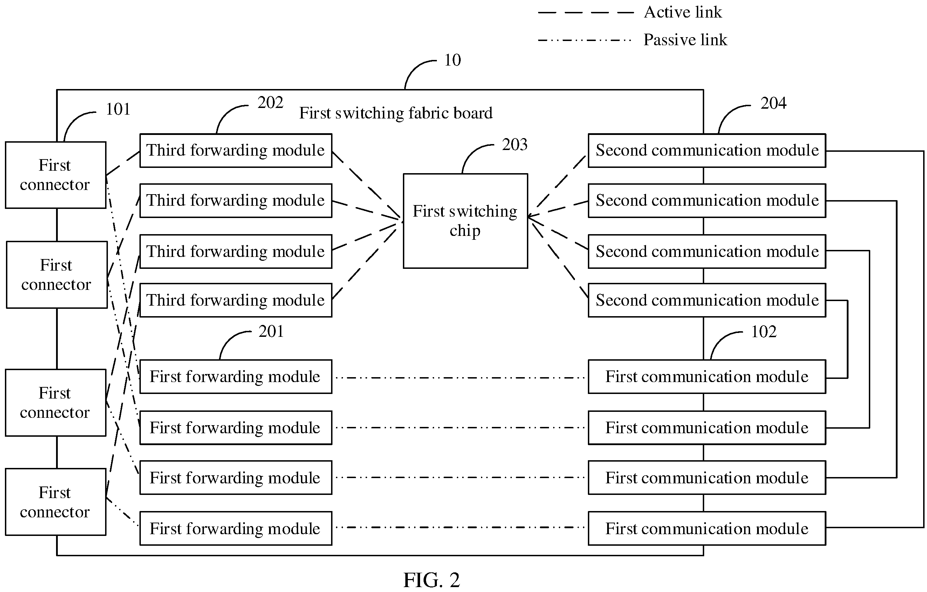

For the case 1, the second communication module and the first switching chip are configured on the first switching fabric board 10, the first switching fabric board 10 further includes a second connector, and the second connector is connected to the first switching chip. Optionally, the second connector may be a connector the same as the first connector 101, or may be a connector different from the first connector 101. For example, in the first switching fabric board 10 shown in FIG. 2, the first connector 101 and the second connector are a same connector, that is, the first connector 101 is connected to both the first forwarding module 201 and the first switching chip 203.

FIG. 2 is a diagram of a structure of the first switching fabric board 10 according to an embodiment of this application. In addition to four first connectors 101 and four first communication modules 102, four second communication modules 204, one first switching chip 203, and four third forwarding modules 202 are further configured on the first switching fabric board 10 shown in FIG. 2. The first connector 101 and the second connector are a same connector. The first communication module 102 is connected to the second communication module 204 through an external signal cable. A link obtained through the connection can pass through, based on data that is sent by the first forwarding module 201 or data that is sent by the third forwarding module 202, the first switching chip 203. A destination port of the data is determined based on the first switching chip 203, to implement data forwarding. For function descriptions of the first forwarding module 201 and the third forwarding module 202 shown in FIG. 2, refer to function description of the first forwarding module 201 in the following embodiments. Details are not described herein again.

In addition, an active link is a link that passes through a switching chip having a data forwarding capability, and the switching chip is a chip having a switching network forwarding protocol. For example, a link that is on the first switching fabric board 10 shown in FIG. 2 and that is connected to the second communication module 204 through the first connector 101, the third forwarding module 202, and the first switching chip 203 is an active link. A passive link is a link that does not pass through a switching chip having a data forwarding capability. For example, a link that is on the first switching fabric board 10 shown in FIG. 2 and that is connected to the first communication module 102 through the first connector 101 and the first forwarding module 201 is a passive link.

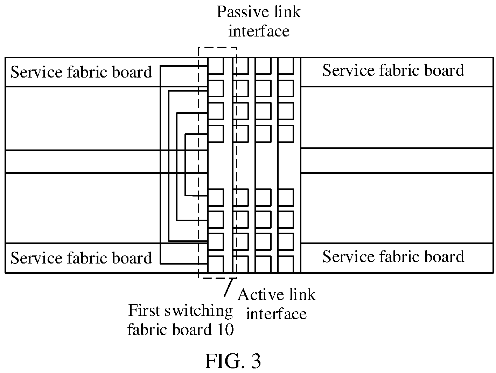

For example, FIG. 3 is a diagram of a device connection according to an embodiment of this application. FIG. 3 shows a case in which a first network device and a second network device are a same network device. A backplane of the first network device is connected to four switching fabric boards and a plurality of service fabric boards. A structure of the first network device shown in FIG. 3 is intended to describe a case in which there are a plurality of service fabric boards connected to the first network device, and does not limit a quantity of service fabric boards. A 4^{th} switching fabric board from top to bottom is used as the first switching fabric board 10, and an active link interface on the first switching fabric board 10 is connected to a passive link interface through a signal cable, to obtain a network device in a single-frame mode.

It should be noted that, the diagram of device connection shown in FIG. 3 is intended to describe a loopback connection of the first switching fabric board 10, but is not intended to limit a connection position of the first switching fabric board 10 on the backplane of the first network device. In a process in which the first switching fabric board 10 is connected to the backplane, the first switching fabric board 10 may be horizontally inserted into a slot of the backplane, as shown in FIG. 3, or may be inserted into a slot of the backplane in another direction. The first switching fabric board 10 and the service fabric board may be perpendicular to each other as shown in FIG. 3, so that backplane cabling is 0, or may be in another position relationship. This is not limited in embodiments of this application.

Case 2: The first switching fabric board 10 and the second switching fabric board are different switching fabric boards.

Optionally, the case 2 includes the following: When the first network device and the second network device are a same network device, the first switching fabric board 10 and the second switching fabric board are different switching fabric boards. For example, because the first network device is configured with a large quantity of service fabric boards that need to perform data switching, a single switching fabric board cannot meet a data switching requirement of the service fabric board on the first network device. Therefore, the first switching fabric board 10 and the second switching fabric board are configured on the first network device, and service fabric boards on the first network device are connected together through a connection between the first switching fabric board 10 and the second switching fabric board, to form data exchange interworking. Optionally, the case 2 further includes the following: When the first network device and the second network device are different network devices, the first switching fabric board 10 and the second switching fabric board are a same switching fabric board.

It should be noted that, that the first switching fabric board 10 and the second switching fabric board are different switching fabric boards means that the first switching fabric board 10 and the second switching fabric board are not a same switching fabric board, but does not mean that the first switching fabric board 10 and the second switching fabric board have different structures. A structure of the first switching fabric board 10 may be the same as or different from a structure of the second switching fabric board. This is not limited in embodiments of this application.

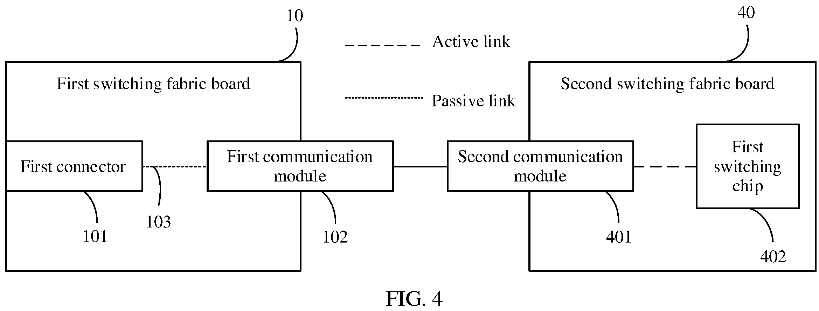

FIG. 4 is a diagram of a connection between the first switching fabric board 10 and a second switching fabric board 40 according to an embodiment of this application. In FIG. 4, one first communication module 102 and one first connector 101 are configured on the first switching fabric board 10, and one second communication module 401 and one first switching chip 402 are configured on the second switching fabric board 40. A passive link on the first switching fabric board 10 is connected to an active link on the second switching fabric board 40, so that a forwarding requirement of first data sent through the passive link is ensured. In addition, the first communication module 102 is connected to the second communication module 401, to implement a connection between the first switching fabric board 10 and the second switching fabric board 40, so as to improve a switching capacity of a target switching fabric board obtained through the connection.

It should be noted that, when the second switching fabric board 40 and the first switching fabric board 10 are different switching fabric boards, the second switching fabric board 40 may be connected to only the first switching fabric board 10, or may be connected to another switching fabric board, for example, a fourth switching fabric board, based on the first switching fabric board 10. A network device connected to the fourth switching fabric board may be the same as the first network device or the second network device, or may be different from the first network device or the second network device. This is not limited in embodiments of this application. A structure of the fourth switching fabric board connected to the second switching fabric board 40 may be different from a structure of the first switching fabric board 10. For example, all links on the fourth switching fabric board are active links, and there is no passive link. In other words, all communication modules on the fourth switching fabric board are connected to a switching chip configured on the fourth switching fabric board. Alternatively, the fourth switching fabric board may have a structure be the same as that of the first switching fabric board 10, and has a passive link that does not pass through the switching chip.

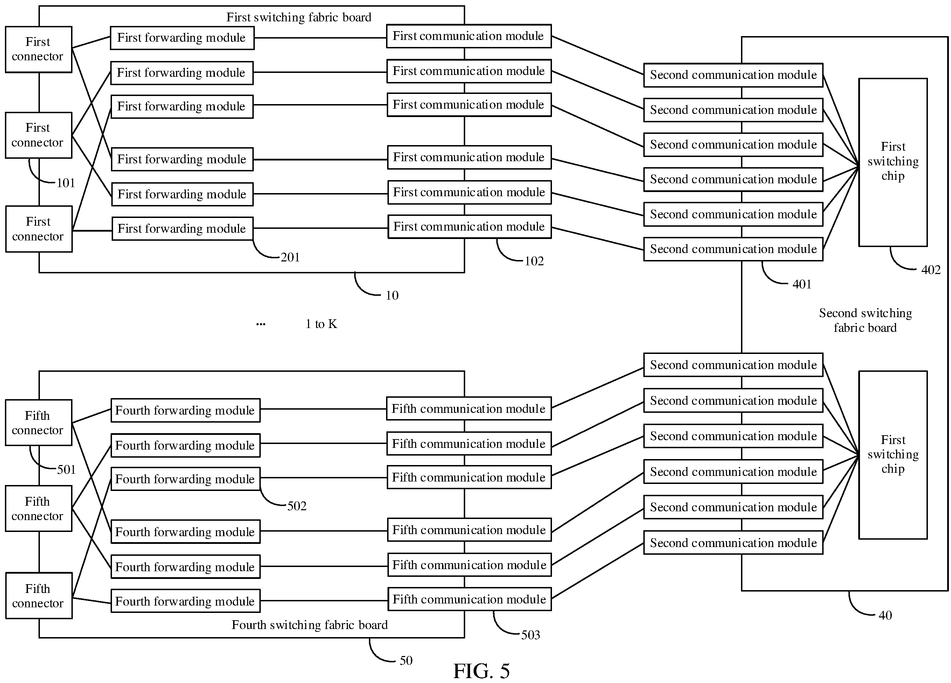

FIG. 5 is another diagram of a connection between the first switching fabric board 10 and the second switching fabric board 40 according to an embodiment of this application. Refer to FIG. 5. Based on the connection to the first switching fabric board 10, the second switching fabric board 40 is further connected to a fourth switching fabric board 50. K in FIG. 5 is a positive integer, and indicates that there may be another switching fabric board between the first switching fabric board 10 and the fourth switching fabric board 50. Six fourth forwarding modules 502, three fifth connectors 501, and six fifth communication modules 503 are configured on the fourth switching fabric board 50 in FIG. 5. Only a passive link is configured on the first switching fabric board 10, and composition of the passive link is similar to composition of the passive link on the first switching fabric board 10 shown in FIG. 2. Details are not described herein again. In this case, the connected device cluster is in a complete single-stage switching network mode.

For example, regardless of a connection status between the first switching fabric board 10 and the second switching fabric board 40, a data forwarding capability of the passive link of the first switching fabric board 10 may be implemented based on a connection to the second switching fabric board 40, to forward the first data transmitted based on the passive link of the first switching fabric board 10.

In a possible implementation, when a data signal transmitted on the first switching fabric board 10 does not meet a transmission condition, the data signal needs to be strengthened. For example, the switching fabric board further includes a first forwarding module 201, the first connector 101 is connected to the first forwarding module 201, and the first forwarding module 201 is further connected to the first communication module 102 based on the first signal cable 103. The first forwarding module 201 includes but is not limited to a driver, or is a first chip having forwarding and cross-connection functions.

It should be noted that the first chip does not have a switching network forwarding protocol, and when data passes through the first chip, the first chip does not perform a forwarding operation on the data. Optionally, there may be one or more first forwarding modules 201. For example, when the first forwarding module 201 is a driver, a quantity of first forwarding modules 201 is consistent with a quantity of first communication modules 102, to implement a one-to-one correspondence between the first forwarding module 201 and the first communication module 102, and send data received by the first forwarding module 201 to the first communication module 102. For another example, when the first forwarding module 201 is a first chip, only one first chip may be configured on the first switching fabric board 10 to connect to a plurality of first communication modules 102. Certainly, both the driver and the first chip may be configured on the first switching fabric board 10. This is not limited in embodiments of this application. A configuration manner of the first forwarding module 201 is similar to a configuration manner of the first communication module 102. Details are not described herein again.

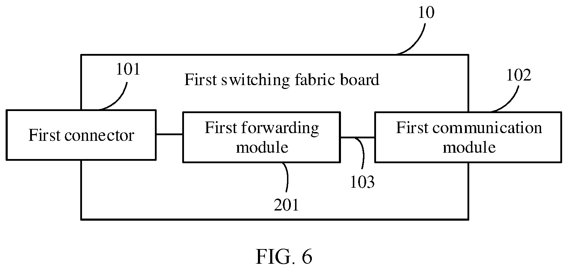

For example, no matter how the first forwarding module 201 is configured on the first switching fabric board 10, the first forwarding module 201 may be connected to the first communication module 102 based on the first signal cable 103, to form a connection link between the first forwarding module 201 and the first communication module 102. FIG. 6 is diagram of a structure of another first switching fabric board 10 according to an embodiment of this application. Refer to FIG. 6. After the first connector 101 is connected to the first forwarding module 201, the first forwarding module 201 is connected to the first communication module 102 based on the first signal cable 103.

It should be noted that FIG. 6 is intended to describe a structure of the first switching fabric board 10 by using an example, but not to limit the structure of the first switching fabric board 10. A position relationship between the first forwarding module 201 and the first communication module 102 that are configured on the first switching fabric board 10 may be shown in FIG. 6. The first forwarding module 201 is located on the left side of the first communication module 102, the first forwarding module 201 may be located on the right side of the first communication module 102, or the first forwarding module 201 may be located above the first communication module 102. This is not limited in embodiments of this application. A cabling trajectory of the first signal cable 103 configured to connect the first forwarding module 201 and the first communication module 102 may be a straight line as shown in FIG. 6, or may be a line segment with an inflection point, or may be an irregular curve. In addition, the first signal cable 103 may be a signal cable configured inside the first switching fabric board 10, or may be a signal cable configured on a surface of the first switching fabric board 10, or may be another connection component that can connect the first forwarding module 201 and the first communication module 102. The first forwarding module 201 and the first communication module 102 are directly connected through the first signal cable 103, and a link obtained through the connection does not pass through a switching chip having a switching network forwarding protocol.

In a possible implementation, the first switching fabric board 10 further includes a second switching chip and a third communication module, and the second switching chip has a data forwarding capability. The second switching chip is connected to the third communication module based on the second signal cable. The third communication module is further configured to connect to the fourth communication module, the fourth communication module is connected to the third connector, and the fourth communication module and the third connector are configured on the third switching fabric board connected to the third network device.

Optionally, one or more second switching chips may be configured on the first switching fabric board 10. A process in which the second switching chip is connected to the third communication module based on the second signal cable is similar to a process in which the first forwarding module 201 is connected to the first communication module 102 based on the first signal cable 103. A description of the third communication module is similar to a description of the first communication module 102, and there may be one or more third communication modules. Details are not described herein again. It should be noted that, regardless of a quantity of third communication modules, a quantity of fourth communication modules connected to the third communication module is the same as a quantity of third communication modules. Optionally, a connection manner between the third communication module and the fourth communication module is similar to a connection manner between the first communication module 102 and the second communication module 401, and also includes two manners in which the third communication module is connected to the fourth communication module based on an optical fiber or a cable.

Because the fourth communication module is connected to the third connector instead of a switching chip having a data forwarding capability, a connection link obtained by connecting the fourth communication module to the third connector is a passive link, and a link obtained by connecting the second switching chip to the third communication module is an active link. The active link on the first switching fabric board 10 is connected to the passive link on the third switching fabric board, so that a quantity of forwarding times of second data is effectively controlled while a forwarding requirement of the second data transmitted based on the active link on the first switching fabric board 10 is ensured.

In this embodiment of this application, a third switching fabric board on which the fourth communication module and the third connector are configured is not limited. The third switching fabric board and the second switching fabric board 40 may be a same switching fabric board. That is, on a basis that the passive link of the first switching fabric board 10 is connected to an active link of the second switching fabric board 40, an active link of the first switching fabric board 10 is connected to a passive link of the second switching fabric board 40. When the third switching fabric board and the second switching fabric board 40 are a same switching fabric board, there are two cases: The second network device and the third network device are a same network device, and the second network device and the third network device are different network devices. Optionally, when the third switching fabric board and the second switching fabric board 40 are different switching fabric boards, the second network device and the third network device may be a same network device, or may be different network devices.

In a possible implementation, the third switching fabric board and the first switching fabric board 10 may alternatively be a same switching fabric board, for example, the case 1 shown in the foregoing embodiment. In this case, the active link on the first switching fabric board 10 is connected to the passive link, that is, the third communication module and the second communication module 401 are a same communication module, and the fourth communication module and the first communication module 102 are a same communication module.

It should be noted that, no matter how the first switching fabric board 10 implements a connection between the active link and the passive link, the first switching fabric board 10 may forward the second data to the third switching fabric board through the active link based on the connection between the first switching fabric board 10 and the third switching fabric board. Optionally, the first switching fabric board 10 further includes a component configured to receive second data transmitted by another fabric board. For example, the first switching fabric board 10 further includes a fourth connector, and the fourth connector is connected to the second switching chip based on a third signal cable. A quantity of fourth connectors is not limited in embodiments of this application. There may be one or more fourth connectors, and the quantity of fourth connectors may be the same as or different from a quantity of first connectors 101. Optionally, for a case in which the first connector 101 is configured on the first switching fabric board 10 shown in the foregoing embodiment, the fourth connector may be a connector the same as the first connector 101, or may be a connector different from the first connector 101. For example, on the first switching fabric board 10, there is a first connector 101 that is connected to both the first communication module 102 and the second switching chip (the first connector 101 and the fourth connector are a same connector), and there is a fourth connector that is connected to only the second switching chip (the first connector 101 and the fourth connector are different connectors).

In a possible implementation, for a case in which the data signal described in the foregoing embodiment does not meet the transmission condition, a second forwarding module may be configured on the first switching fabric board 10, to strengthen the data signal sent by the fourth connector. For example, the first switching fabric board 10 further includes the second forwarding module, the fourth connector is connected to the second forwarding module, and the second forwarding module is connected to the second switching chip based on the third signal cable. A description of the second forwarding module is similar to a description of the first forwarding module 201, and a process of connecting the second forwarding module to the third communication module based on the third signal cable is similar to a process of connecting the first forwarding module 201 to the first communication module 102 based on the first signal cable 103. Details are not described herein again.

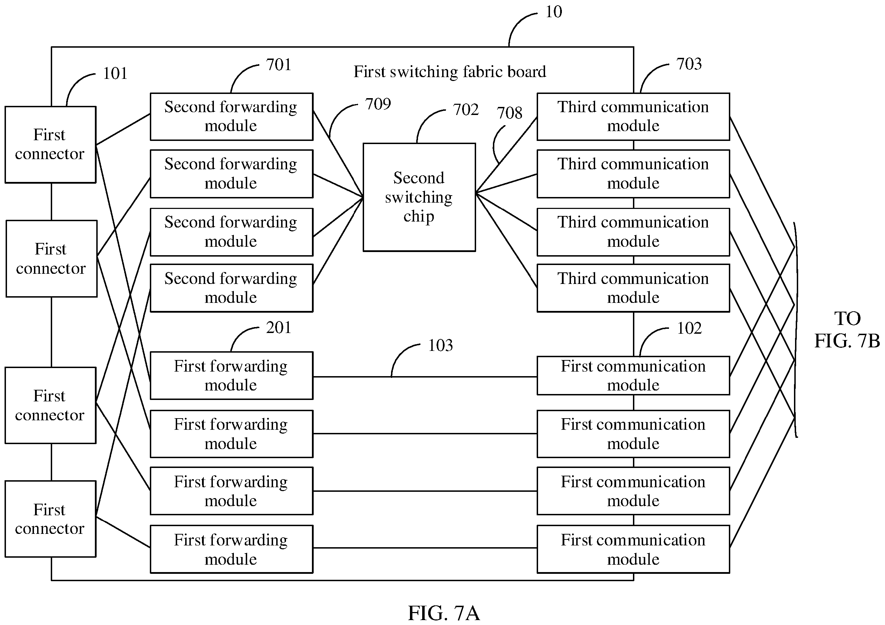

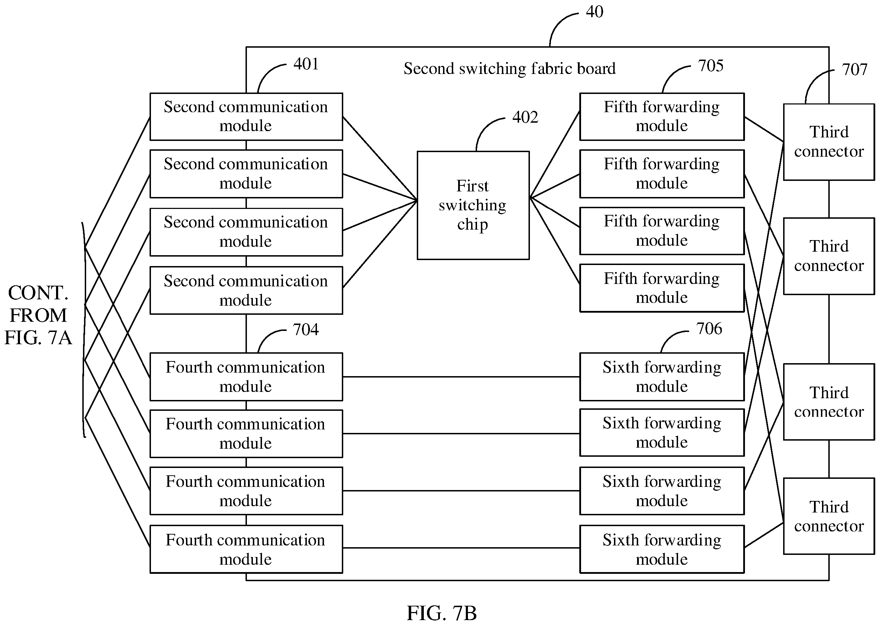

To make a connection process of the first switching fabric board 10 provided in this embodiment of this application clearer, an example in which the second switching fabric board 40 and the third switching fabric board are a same switching fabric board is used to describe a device cluster obtained through the connection. FIG. 7A and FIG. 7B are a diagram of a connection between the first switching fabric board 10 and the second switching fabric board 40 according to an embodiment of this application. Refer to FIG. 7A and FIG. 7B. Four first connectors 101, four first forwarding modules 201, four second forwarding modules 701, one second switching chip 702, four first communication modules 102, and four third communication modules 703 are configured on the first switching fabric board 10. Four second communication modules 401, four fourth communication modules 704, one first switching chip 402, four fifth forwarding modules 705, four sixth forwarding modules 706, and four third connectors 707 are configured on the second switching fabric board 40. A connection relationship between the foregoing components is shown in FIG. 7A and FIG. 7B. For example, the first forwarding module 201 is connected to the first communication module 102 based on the first signal cable 103, the second forwarding module 701 is connected to the second switching chip 702 based on a third signal cable 709, and the second switching chip 702 is connected to the third communication module 703 based on a second signal cable 708. For a connection relationship of another component, refer to FIG. 7A and FIG. 7B. Details are not described herein again.

It should be noted that FIG. 7A and FIG. 7B merely describe a connection relationship between the first switching fabric board 10 and the second switching fabric board 40 by using an example, but do not limit structures of the first switching fabric board 10 and the second switching fabric board 40. The structures of the first switching fabric board 10 and the second switching fabric board 40 may be the same as those shown in FIG. 7A and FIG. 7B, and the structures of the first switching fabric board 10 and the second switching fabric board 40 may alternatively be different. For example, when quantities of first communication modules 102 and third communication modules 703 on the first switching fabric board 10 are different, quantities of corresponding second communication modules 401 and fourth communication modules 704 on the second switching fabric board 40 are also correspondingly different. For another example, when the third communication module 703 does not exist on the first switching fabric board 10, the second switching fabric board 40 does not include the fourth communication module 704 either, but the second switching fabric board 40 includes the first switching chip 402 that does not exist on the first switching fabric board 10.

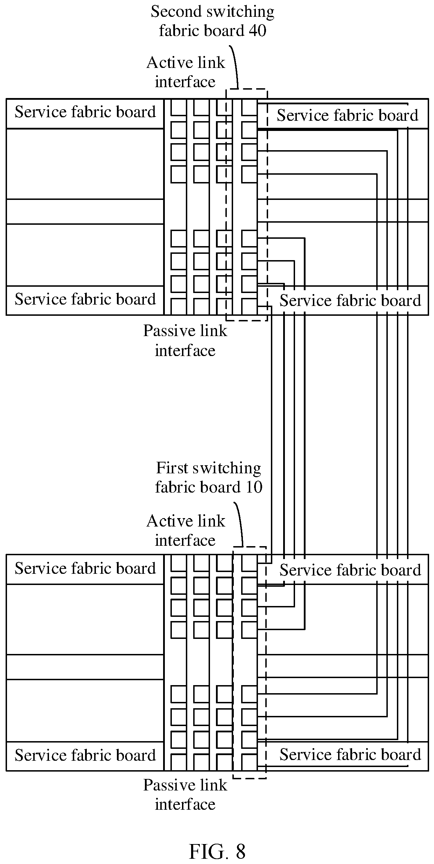

Optionally, active links and passive links on the first switching fabric board 10 and the second switching fabric board 40 are connected in a complementary manner, so that the passive links on the two switching fabric boards both have a data forwarding capability that meets a switching network forwarding protocol, and a target link finally obtained through the connection passes through a full-connection delivery mode of the active link once, in other words, a full mesh (full mesh) structure of the switching network is formed, so that any link can be reachable. For example, FIG. 8 is a diagram of a device connection according to an embodiment of this application. FIG. 8 shows a connection relationship between the first network device and the second network device when the first switching fabric board 10 and the second switching fabric board 40 are different switching fabric boards, and the first network device and the second network device are different network devices. The first switching fabric board 10 and the second switching fabric board 40 shown in FIG. 8 are configured on two independent backplanes, which are a backplane of the first network device and a backplane of the second network device respectively. A plurality of service fabric boards for processing data are further configured on the backplanes. As shown in FIG. 8, an active link interface of the first switching fabric board 10 is connected to a passive link interface of the second switching fabric board 40, and a passive link interface of the first switching fabric board 10 is connected to an active link interface of the second switching fabric board 40.

In a possible implementation, the active link on the first switching fabric board 10 is not only configured to connect to a passive link, but also may be connected to an active link on a fifth switching fabric board. That is, the third communication module 703 is further configured to connect to a sixth communication module, the sixth communication module is connected to any switching chip, the any switching chip has a data forwarding capability, and the sixth communication module and the any switching chip are configured on the fifth switching fabric board connected to the fourth network device. The fifth switching fabric board and the second switching fabric board 40 may be a same switching fabric board. In this case, the fourth network device and the second network device may be a same network device, or the fourth network device and the second network device may be different network devices. Optionally, the fifth switching fabric board and the second switching fabric board 40 may alternatively be different switching fabric boards. In this case, the fourth network device and the second network device may be a same network device, or the fourth network device and the second network device may be different network devices.

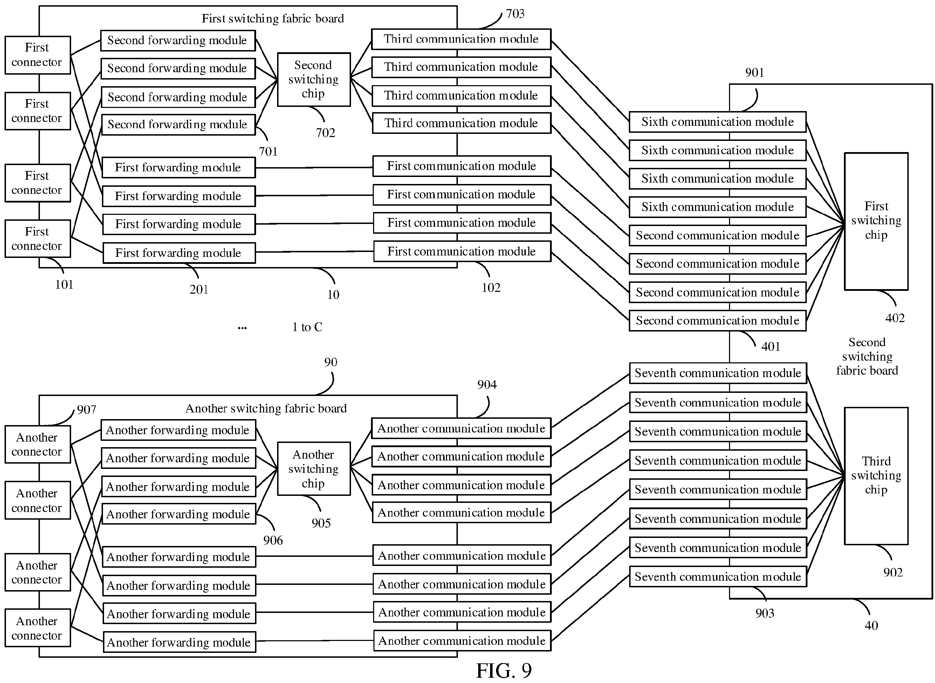

For example, that the fifth switching fabric board and the second switching fabric board 40 are a same switching fabric board is used as an example. For a diagram of a connection between the first switching fabric board 10 and the second switching fabric board 40, refer to FIG. 9. C in FIG. 9 is a positive integer, and indicates that there may be more switching fabric boards between the first switching fabric board 10 and another switching fabric board 90. The another switching fabric board 90 has eight other communication modules 904, one other switching chip 905, eight other forwarding modules 906, and four other connectors 907. A structure of the first switching fabric board 10 is similar to a structure of the first switching fabric board 10 in FIG. 7A and FIG. 7B. Details are not described herein again. Refer to FIG. 9. Communication modules (including the second communication module 401, the sixth communication module 901, and the seventh communication module 903) on the second switching fabric board 40 are all connected to switching chips (including the first switching chip 402 and the third switching chip 902), that is, the second switching fabric board 40 does not have a passive link. In this case, the passive link on the first switching fabric board 10 is connected to the active link on the second switching fabric board 40 based on the first communication module 102, and the active link on the first switching fabric board 10 is connected to the active link on the second switching fabric board 40 based on the third communication module 703.

The first switching fabric board 10 may be compatible with two link connection manners: An active link is connected to an active link, and a passive link is connected to an active link, and has high universality. Optionally, when the active link on the second switching fabric board 40 is connected to the active link on the first switching fabric board 10, as shown in FIG. 9, the second switching fabric board 40 may be further connected to another switching fabric board 90 in addition to the first switching fabric board 10, or the second switching fabric board 40 may be connected to only the first switching fabric board 10. This is not limited in embodiments of this application.

When the second switching fabric board 40 is connected to a plurality of switching fabric boards, a structure of another switching fabric board 90 may be the same as a structure of the first switching fabric board 10, or may be different from a structure of the first switching fabric board 10. For example, the another switching fabric board 90 includes only a passive link, and in this case, a connection between the another switching fabric board 90 and the second switching fabric board 40 is a connection between a passive link and an active link. Regardless of a structure of the another switching fabric board 90, a plurality of switching fabric boards (the first switching fabric board 10 and the another switching fabric board 90) may be connected through the second switching fabric board 40, to implement a multi-chassis cluster. A connection status of the second switching fabric board 40 is not limited in embodiments of this application. For example, switching fabric boards on four network devices may be connected through one second switching fabric board 40, or switching fabric boards on eight network devices may be interconnected through two second switching fabric boards 40.

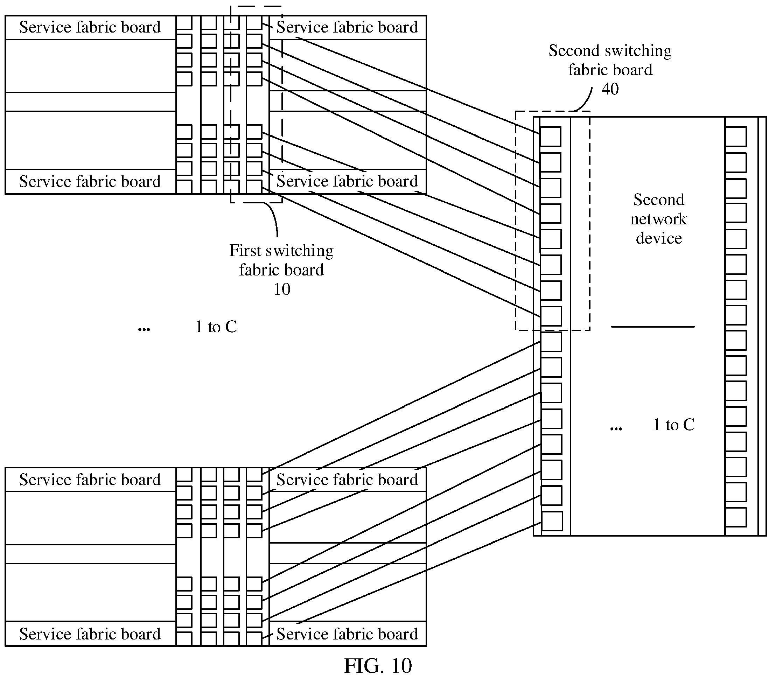

Optionally, FIG. 10 is a diagram of a device connection according to an embodiment of this application. The device connection shown in FIG. 10 is a diagram of a connection between a first network device and a second network device when the second network device and a fourth network device are a same network device. The first network device in FIG. 10 is a network device in which the first switching fabric board 10 is located. A meaning of C in FIG. 10 is similar to that of C in FIG. 9. Details are not described herein again. As shown in FIG. 10, interconnection between a plurality of network devices may be implemented through a connection between the first switching fabric board 10 and the second switching fabric board 40, to obtain a device cluster, so as to improve a data forwarding capacity of the device cluster.

In conclusion, according to the switching fabric board provided in this embodiment of this application, a connection between the first communication module 102 and the first connector 101 may be implemented without using a switching chip, so that cabling density on the first switching fabric board 10 is effectively controlled. In addition, the passive link on the first switching fabric board 10 is connected to the active link on the second switching fabric board 40, and based on the first switching chip 402 in the active link on the second switching fabric board 40, a forwarding requirement of data transmitted through the passive link is ensured. A structure of the switching fabric board is simplified without affecting forwarding performance of the switching fabric board, and costs of manufacturing the switching fabric board are reduced. The active link is connected to the passive link to connect to the switching fabric board, so that a quantity of switching chips that need to be passed through for data transmission is not increased while a switching capacity of the switching fabric board obtained through the connection is improved. This further controls a quantity of forwarding times of data, and effectively reduces power consumption of the switching fabric board during running. In addition, the first switching fabric board 10 may be applied to a plurality of scenarios such as a single-chassis scenario, a back-to-back cluster scenario, and a multi-chassis cluster scenario, and has a wide application scope and high universality.

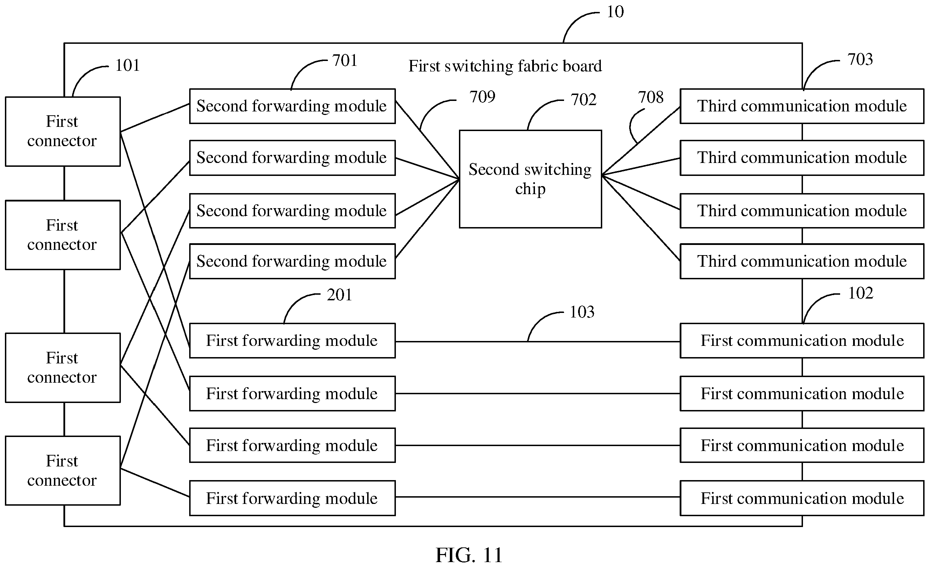

In a possible implementation, FIG. 11 is a diagram of a structure of a first switching fabric board according to an embodiment of this application. Eight communication modules (including the first communication module 102 and the third communication module 703), four first connectors 101, one second switching chip 702, and eight forwarding modules (including the first forwarding module 201 and the second forwarding module 701) are configured on the first switching fabric board 10. An optimization effect of the first switching fabric board 10 is shown in Table 1.

**Table 1**

| | Switching fabric board | Forwarding module | Switching chip | Cabling density | Power consumption | Costs |
|---|---|---|---|---|---|---|
| Conventional technology | Eight communication modules | Eight | Two | A | B | B |
| This application | Eight communication modules | Eight | One | A × 50% | B × 60% | B × 60% |

When eight communication modules and eight forwarding modules are configured on a switching fabric board (referred to as a related fabric board below) in the conventional technology, two switching chips are further configured, and a connection between any communication module on the related fabric board and the forwarding module needs to pass through the switching chip. When eight communication modules and eight forwarding modules are configured on the switching fabric board (the first switching fabric board 10) in this application, only one switching chip needs to be configured. By reducing a quantity of switching chips configured on the switching fabric board, the cabling density, power consumption, and costs are optimized.

For example, when the cabling density of the related fabric board is A, the cabling density of the first switching fabric board 10 is A × 50%, which is reduced by 50%. For example, a connection line between the forwarding module and the communication module is used as an example to describe reduction of the cabling density on the switching fabric board. When there are eight communication modules and eight forwarding modules on the related fabric board, one communication module is connected to one of the switching chips, then the switching chip is connected to the forwarding module, and two signal cables are required in total. After the eight communication modules are in a one-to-one connection to the eight forwarding modules, 16 signal cables are configured on the related fabric board. However, in the switching fabric board in this application, when there are eight communication modules and eight forwarding modules on the first switching fabric board 10, refer to the switching fabric board shown in FIG. 11. Four first communication modules 102 that do not pass through the second switching chip 702 need to be connected to four first forwarding modules 201 through only four signal cables (first signal cables 103). Four third communication modules 703 that pass through the second switching chip 702 need to be connected to four second forwarding modules 701 through eight signal cables (four second signal cables 708 and four third signal cables 709). The first switching fabric board 10 is configured with 12 signal cables, to complete connections between eight communication modules and eight forwarding modules. Compared with 16 signal cables on a related fabric board that are needed for connections between eight communication modules and eight forwarding modules, the connections effectively reduce a quantity of signal cables on the switching fabric board, and further reduce cabling density.

For example, the power consumption of the related fabric board is B, and the power consumption of the switching fabric board in this application is B × 60%, which is reduced by 40%. For example, the costs of the related fabric board are B, and the costs of the switching fabric board in this application are B × 60%, which are reduced by 40%. A and B are positive numbers. In this application, only A and B reflect a value relationship between the cabling density, power consumption, and costs of the related fabric board and the first switching fabric board 10, and A and B are not used to limit the cabling density, power consumption, and costs of the related fabric board and the first switching fabric board 10.

It should be noted that, cost reduction of the switching fabric board not only means that a benefit of configuring one switching chip is reduced, but also means that engineering difficulty of the switching fabric board is reduced, power consumption of the switching fabric board is reduced, and a cost benefit of a PCB and a heat sink is reduced. A cost benefit of the PCB is that a quantity of layers of the switching fabric board is reduced, and therefore no special process is required. The quantity of layers of the switching fabric board refers to a quantity of data forwarding times on the switching fabric board. After a related fabric board is connected to a related fabric board, the data needs to pass through the switching chip twice, and is forwarded twice. However, after the first switching fabric board 10 and the second switching fabric board 40 that are provided in this application are connected, when the first data is forwarded, the first data needs to pass through only the first switching chip 402 on the second switching fabric board 40, and needs to be forwarded once, so that a quantity of data forwarding times and a quantity of layers are reduced. Cost benefit reduction of the heat sink is that a heat dissipation requirement is reduced by 40% and heat dissipation can be implemented without using a strong heat sink.

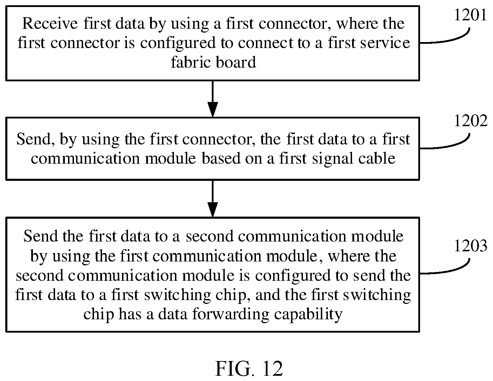

An embodiment of this application further provides a data forwarding method. The method is applied to the switching fabric board shown in the foregoing embodiment. As shown in FIG. 12, the method includes S1201 to S 1203.

S1201: Receive first data by using a first connector, where the first connector is configured to connect to a first service fabric board.

Optionally, the first service fabric board connected to the first connector may be a service fabric board located on a first network device, or may be a service fabric board located on another network device. The first connector is connected to the first service fabric board, to receive first data sent by the first service fabric board. The received first data may be any data that needs to be forwarded, including but not limited to video data, game data, or another type of data.

S1202: Send, by using the first connector, the first data to a first communication module based on a first signal cable.

In this embodiment of this application, an occasion at which the first connector sends the first data to the first communication module is not limited. After receiving the first data, the first connector may perform an operation of sending the first data to the first communication module, or may send the first data to the first communication module at a specific interval. For example, the specific time interval may be an interval threshold that is set based on experience, or may be flexibly adjusted based on a congestion status of the first communication module. For example, a length of a transmission queue of the first communication module indicates the congestion status of the first communication module. When the length of the transmission queue of the first communication module is greater than a first length, the first data is buffered; or when the length of the transmission queue of the first communication module is less than a first length, the first data is sent to the first communication module. Optionally, the first length may be set based on experience. By determining a relationship between the length of the transmission queue and the first length, an occasion at which the first connector sends the first data to the first communication module is adjusted, to avoid impact such as a packet loss caused by congestion of the first communication module due to an excessive amount of data to be transmitted on the first communication module.

In a possible implementation, when a first forwarding module is configured on a first switching fabric board, the sending first data to the first communication module includes: sending the first data to the first forwarding module by using the first connector; and sending, by using the first forwarding module, the first data to the first communication module based on the first signal cable. In this case, after receiving the first data, the first forwarding module strengthens a signal of the first data, and then performs a forwarding operation on the first data.

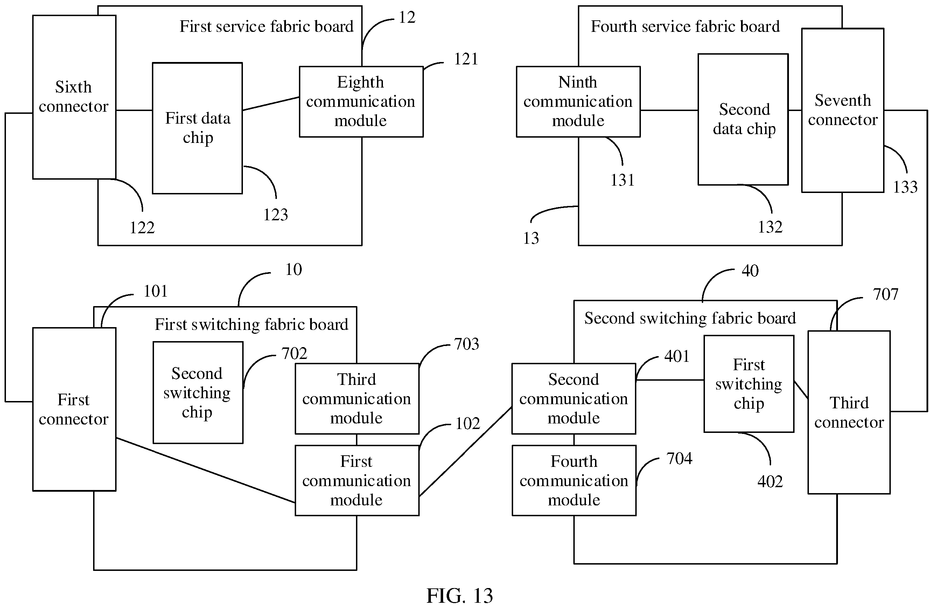

FIG. 13 is a diagram of a data forwarding process according to an embodiment of this application. Refer to FIG. 13. The first connector 101 configured on the first switching fabric board 10 is connected to a sixth connector 122 configured on a first service fabric board 12, so that the first switching fabric board 10 is connected to the first service fabric board 12. A data chip (including a first data chip 123 and a second data chip 132) for processing data, a communication module (including an eighth communication module 121 and a ninth communication module 131), and a connector (including the sixth connector 122 and a seventh connector 133) are configured on the service fabric board (including the first service fabric board 12 and a fourth service fabric board 13). A transmission trajectory of the first data before the first data is sent to the first switching fabric board 10 is as follows: the eighth communication module 121 → the first data chip 123 → the sixth connector 122 → the first connector 101. After receiving the first data by using the first connector 101, the first switching fabric board 10 may forward the first data based on the data forwarding method shown in FIG. 12.

S1203: Send the first data to a second communication module by using the first communication module, where the second communication module is configured to send the first data to a first switching chip, and the first switching chip has a data forwarding capability.

In a possible implementation, the first communication module is connected to the second communication module, and based on the connection relationship, the first communication module implements an operation of sending the first data to the second communication module. Optionally, the first communication module is connected to the second communication module based on an optical fiber or a cable. An occasion at which the first communication module sends the first data to the second communication module is similar to an occasion at which the first connector sends the first data to the first communication module shown in S 1202. Details are not described herein again. The first data is sent to the second communication module, and the first data is forwarded based on the first switching chip connected to the second communication module.

For example, when the first switching chip forwards the first data, the first switching chip having a switching network forwarding protocol may determine a destination port of the received data, that is, the first switching chip may determine, from a plurality of ports, a port to which the data needs to be sent. In addition, the first switching chip may further obtain a port status of each global switching fabric board. The global switching fabric board is configured to cascade a plurality of network devices, to obtain a switching fabric board of a device cluster. For example, when the first switching fabric board and the second switching fabric board are different switching fabric boards, the first switching chip configured on the second switching fabric board can obtain a status of each port on the first switching fabric board and a status of each port on the second switching fabric board, to determine a destination port of the first data based on a plurality of port statuses and a destination address of the first data. In this case, although a link connected to the first communication module on the first switching fabric board does not pass through a switching chip, because the first switching chip has obtained the status of each port on the first switching fabric board, the first data can be forwarded. Optionally, the destination port of the first data is an internet protocol (internet protocol, IP) address, and is used to reflect a port number of a host to which the first data needs to be transmitted.

Refer to a schematic flowchart of data forwarding shown in FIG. 13. After the second switching fabric board 40 receives the first data by using the second communication module 401, a forwarding process of the first data is as follows: the second communication module 401 → the first switching chip 402 → the third connector 707. Because the second switching fabric board is connected to the fourth service fabric board 13 by using the third connector 707, the first data may be sent to the fourth service fabric board 13 based on the second switching fabric board 40, to implement cross-service fabric board forwarding of the first data, and implement data interworking between the first service fabric board 12 and the fourth service fabric board 13.

In a possible implementation, in addition to a case in which the first switching fabric board and the second switching fabric board shown in FIG. 13 are different, there is another case in which the first switching fabric board and the second switching fabric board may be a same switching fabric board, that is, the first switching chip and the second communication module are configured on the first switching fabric board. In this case, the first switching fabric board further includes a second connector, and the second connector is connected to the first switching chip. Based on this, after sending the first data to the second communication module by using the first communication module, the first switching fabric board further sends the first data to the first switching chip by using the second communication module, and forwards the first data to the second connector by using the first switching chip, where the second connector is configured to connect to the second service fabric board.

Optionally, a process in which the second communication module sends the first data to the first switching chip is similar to the process in which the first data is sent to the first communication module by using the first connector shown in S1202, or the first data may be transmitted by using a signal cable on the first switching fabric board, and an occasion at which the second communication module sends the first data is similar to an occasion at which the first connector sends the first data. Details are not described herein again.

For example, a process of forwarding the first data to the second connector based on the first switching chip is similar to the process of forwarding the first data based on the first switching chip in the foregoing embodiment. Details are not described herein again. In addition, because the second connector is configured to connect to the second service fabric board, data sent by the first service fabric board may be forwarded to the second service fabric board by using the first switching fabric board, to complete data forwarding between different service fabric boards. Optionally, the second service fabric board may be a service fabric board on the first network device, or may be a service fabric board on another network device. This is not limited in embodiments of this application.

In a possible implementation, a second switching chip and a third communication module are further configured on the first switching fabric board, where the second switching chip has a data forwarding capability. The data forwarding performed based on the first switching fabric board further includes: receiving second data by using the second switching chip; forwarding, by using the second switching chip, the second data to a third communication module based on a second signal cable; and sending the second data to a fourth communication module by using the third communication module, where the fourth communication module is configured to send the second data to a third connector. The third communication module may be connected to the fourth communication module through an optical fiber or a cable.

Optionally, when an active link that passes through the second switching chip is configured on the first switching fabric board, the first switching fabric board further includes a first connector. In this case, a process of receiving second data by using the second switching chip includes: receiving, by using the second switching chip, the second data that is sent by a fourth connector based on a third signal cable, where the fourth connector is configured to connect to a third service fabric board. In a possible implementation, when a third forwarding module is further configured on the first switching fabric board to strengthen a signal of the second data, the receiving the second data by using the second switching chip includes: receiving, by using a third forwarding module, the second data that is sent by the fourth connector; and receiving, by using the second switching chip, the second data that is sent by the third forwarding module based on the third signal cable. A process of sending the second data is similar to a process of sending the first data. Details are not described herein again.

It should be noted that different forwarding paths of the first data and the second data only indicate that forwarding paths that are of the first data and the second data and that are determined based on the destination addresses are different, but do not indicate that destination addresses of the first data and the second data are different. For example, when source addresses of the first data and the second data are different, even if the destination addresses of the first data and the second data are the same, the forwarding paths of the first data and the second data are different. Certainly, the first data and the second data may alternatively have a same destination address and a same source address. However, when selecting a forwarding path, in view of congestion statuses of output ports of different switching fabric boards and/or congestion statuses of the first communication module and the third communication module of the first switching fabric board, the first network device selects to forward the first data based on a passive link of the first switching fabric board and forward the second data based on an active link of the first switching fabric board.

It should be noted that the foregoing example is intended to describe a data forwarding process on the first switching fabric board, but not to limit a data forwarding direction on the first switching fabric board. As described in the foregoing embodiment, the data forwarding direction may be forwarding from the first connector to the first communication module, and forwarding from the first communication module to the second communication module. A data forwarding direction on the first switching fabric board may alternatively be opposite to that in the example in the foregoing embodiment. That is, after receiving data that is sent by the second communication module on the second switching fabric board, the first communication module sends the data to the first connector.

In conclusion, according to the data forwarding method provided in this embodiment of this application, both the second data forwarded through the active link and the first data transmitted through the passive link can be forwarded, and the data needs to be forwarded through the switching chip only once. By reducing a quantity of switching chips that are passed through in a data transmission process, delay time of data passing through a switching network is controlled, forwarding time is short, and efficiency is high.

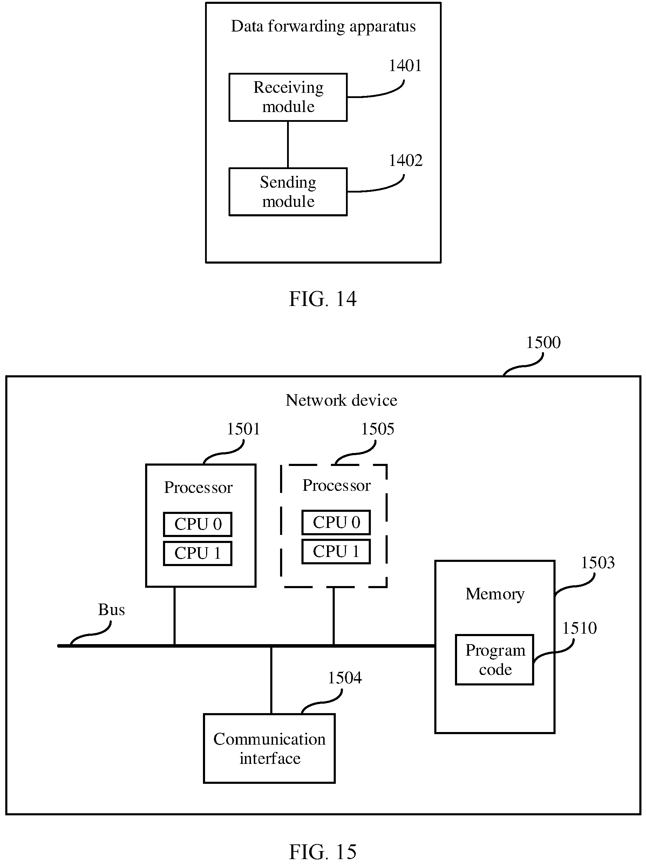

The foregoing describes the data forwarding method in this embodiment of this application. Corresponding to the foregoing method, an embodiment of this application further provides a data forwarding apparatus. FIG. 14 is a diagram of a structure of a data forwarding apparatus according to an embodiment of this application. Based on the following plurality of modules shown in FIG. 14, the data forwarding apparatus shown in FIG. 14 can perform all or some operations shown in FIG. 12. It should be understood that the apparatus may include more additional modules than the shown modules, or a part of the shown modules are omitted. This is not limited in embodiments of this application. As shown in FIG. 14, the apparatus is used in the switching fabric board shown in FIG. 1, and the apparatus includes:
a receiving module 1401, configured to receive first data by using a first connector, where the first connector is configured to connect to a first service fabric board; and
a sending module 1402, configured to send, by using the first connector, the first data to a first communication module based on a first signal cable, where
the sending module 1402 is further configured to send the first data to a second communication module by using the first communication module, where the second communication module is configured to send the first data to a first switching chip, and the first switching chip has a data forwarding capability.

In a possible implementation, the sending module 1402 is further configured to send the first data to the first switching chip by using the second communication module; and the apparatus further includes: a first forwarding module, configured to forward the first data to a second connector by using the first switching chip, where the second connector is configured to connect to a second service fabric board.

In a possible implementation, the sending module 1402 is configured to: send the first data to the first forwarding module by using the first connector; and send, by using the first forwarding module, the first data to the first communication module based on the first signal cable.

In a possible implementation, the receiving module 1401 is further configured to receive second data by using a second switching chip, and the apparatus further includes: a second forwarding module, configured to forward, by using the second switching chip, the second data to a third communication module based on a second signal cable; and the sending module 1402 is further configured to send the second data to a fourth communication module by using the third communication module, where the fourth communication module is configured to send the second data to a third connector.

In a possible implementation, the receiving module 1401 is configured to receive, by using the second switching chip, the second data that is sent by a fourth connector based on a third signal cable, where the fourth connector is configured to connect to a third service fabric board.

In a possible implementation, the receiving module 1401 is configured to: receive the second data sent by the fourth connector by using a third forwarding module; and receive, by using the second switching chip, the second data that is sent by the third forwarding module based on the third signal cable.

In the apparatus, after receiving the first data sent by the first connector, the first communication module sends the first data to the second communication module, and then sends the first data to the first switching chip having a data forwarding capability by using the second communication module. Because the first switching chip has the data forwarding capability, the first data may be forwarded based on the first switching chip, and the first data needs to be forwarded only once by the first switching chip. Therefore, a quantity of forwarding times is small, time is short, and efficiency is high.

It should be understood that, when the foregoing apparatus implements the functions of the apparatus, division into the foregoing functional modules is merely used as an example for description. During actual application, the foregoing functions may be allocated to different functional modules for implementation according to a requirement. In other words, a device is divided into different functional modules in terms of an inner structure, to implement all or a part of the functions described above. In addition, the apparatuses provided in the foregoing embodiments and the method embodiments belong to a same concept. For specific implementation processes thereof, refer to the method embodiments. Details are not described herein again.

FIG. 15 is a diagram of a structure of a network device 1500 according to an example embodiment of this application. The network device 1500 shown in FIG. 15 is configured with the first switching fabric board (not shown in FIG. 15) shown in FIG. 1, and the first switching fabric board is configured to perform an operation related to the first switching fabric board in the data forwarding method shown in FIG. 12. The network device 1500 is, for example, a switch or a router, and the network device 1500 may be implemented by using a general bus architecture.

As shown in FIG. 15, the network device 1500 includes at least one processor 1501, a memory 1503, and at least one communication interface 1504.

The processor 1501 is, for example, a general central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 1501 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of this application. Alternatively, the processor may be a combination of processors implementing a computing function, for example, a combination including one or more microprocessors, or a combination of a DSP and a microprocessor.

Optionally, the network device 1500 further includes a bus. The bus is configured to transmit information between components of the network device 1500. The bus may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, only one thick line is used to represent the bus in FIG. 15, but this does not mean that there is only one bus or only one type of bus.

The memory 1503 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium, or another magnetic storage device, or any other medium that can be used to carry or store expected program code in a form of an instruction or a data structure and that can be accessed by a computer, but is not limited thereto. The memory 1503 exists independently, for example, and is connected to the processor 1501 through the bus. Alternatively, the memory 1503 may be integrated with the processor 1501.

The communication interface 1504 is any apparatus like a transceiver, and is configured to communicate with another device or a communication network. The communication network may be the Ethernet, a radio access network (RAN), a wireless local area network (wireless local area networks, WLAN), or the like. The communication interface 1504 may include a wired communication interface and may further include a wireless communication interface. Specifically, the communication interface 1504 may be an Ethernet (ethernet) interface, a fast Ethernet (fast ethernet, FE) interface, a gigabit Ethernet (gigabit ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 1504 may be used by the network device 1500 to communicate with another device.

During specific implementation, in an embodiment, the processor 1501 may include one or more CPUs, such as a CPU 0 and a CPU 1 shown in FIG. 15. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 1500 may include a plurality of processors, for example, a processor 1501 and a processor 1505 shown in FIG. 15. Each of the processors may be a single-core (single-CPU) processor or may be a multi-core (multi-CPU) processor. The processor herein may be one or more devices, circuits, and/or processing cores configured to process data (for example, computer program instructions).

During specific implementation, in an embodiment, the network device 1500 may further include an output device and an input device. The output device communicates with the processor 1501, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 1501, and may receive an input from a user in a plurality of manners. For example, the input device may be a mouse, a keyboard, a touchscreen device, a sensing device, or the like.

In some embodiments, the memory 1503 is configured to store program code 1510 for executing the solutions of this application, and the processor 1501 may execute the program code 1510 stored in the memory 1503. The program code 1510 may include one or more software modules. Optionally, the processor 1501 may alternatively store program code or instructions for executing the solutions of this application.

Steps performed by the first switching fabric board in the data forwarding method shown in FIG. 12 are completed through an integrated logical circuit of the first switching fabric board or instructions in a form of software. The steps of the method disclosed with reference to embodiments of this application may be directly performed by a hardware processor, or may be performed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

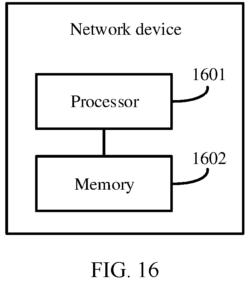

FIG. 16 is a diagram of a structure of another network device according to an embodiment of this application. The network device includes the first switching fabric board (not shown in FIG. 16) shown in FIG. 1, and the first switching fabric board is configured to perform an operation related to the first switching fabric board in the data forwarding method shown in FIG. 12. For example, the network device is, for example, a server. The server may have a large difference due to different configurations or performance, and may include one or more processors (central processing units, CPUs) 1601 and one or more memories 1602. The one or more memories 1602 store at least one computer program, and the at least one computer program is loaded and executed by the one or more processors 1601. Certainly, the network device may further have components such as a wired or wireless network interface, a keyboard, and an input/output interface, to perform input/output. The network device may further include another component configured to implement a function of the device. Details are not described herein.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is enabled to perform the data forwarding method.

It should be understood that the foregoing processor may be a central processing unit (Central Processing Unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a switching subrack. The switching subrack includes at least one switching fabric board shown in FIG. 1.

An embodiment of this application further provides a network system. The network system includes at least two network devices, and the at least two network devices are connected through the switching fabric board shown in FIG. 1.

An embodiment of this application further provides a chip, including a processor, configured to invoke, from a memory, and run instructions stored in the memory, so that a communication device in which the chip is installed performs the data forwarding method provided in embodiments of this application.

An embodiment of this application further provides another chip, including an input interface, an output interface, a processor, and a memory. The input interface, the output interface, the processor, and the memory are connected to each other through an internal connection path. The processor is configured to execute code in the memory. When the code is executed, the processor is configured to perform any data forwarding method above.

An embodiment of this application further provides a computer program (product). The computer program (product) includes computer program code. When the computer program code is run by a computer, the computer is enabled to perform the data forwarding method provided in embodiments of this application.

An embodiment of this application further provides a computer-readable storage medium. The computer-readable storage medium stores a program or instructions. When the program or the instructions is/are run on a computer, the data forwarding method provided in embodiments of this application is performed.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

To clearly describe the interchangeability of hardware and software, the steps and composition of embodiments have been generally described in the foregoing descriptions in terms of functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable data forwarding apparatus, so that when the program code is executed by the computer or the another programmable data forwarding apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into modules is merely division into logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented through some interfaces, devices, or modules, or may be electrical, mechanical, or other forms of connections.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

In this application, terms such as "first" and "second" are used to distinguish between same items or similar items that have basically same functions. It should be understood that "first", "second", and "n^{th}" do not have a logical or time sequential dependency relationship, and do not limit the quantity and execution sequence. It should also be understood that although the following descriptions use terms such as "first" and "second" to describe various elements, these elements should not be limited by the terms. These terms are simply used to distinguish one element from another. For example, without departing from the scope of the various examples, first data may be referred to as second data, and similarly, the second data may be referred to as the first data.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should also be understood that, depending on the context, the phrase "if it is determined..." or "if [a stated condition or event] is detected" may be interpreted to mean "once determining" or "in response to determining..." or "once detecting [the stated condition or event] "or "in response to the detection of [the stated condition or event]".

It should be understood that determining B based on A does not mean that B is determined based only on A, and B may also be determined based on A and/or other information.

It should further be understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

## Claims

1. A switching fabric board, wherein the switching fabric board is a first switching fabric board connected to a first network device, and the first switching fabric board comprises a first connector and a first communication module;
the first connector is connected to the first communication module based on a first signal cable; and
the first communication module is further configured to connect to a second communication module, the second communication module is connected to a first switching chip, the first switching chip has a data forwarding capability, and the second communication module and the first switching chip are configured on a second switching fabric board connected to a second network device.

2. The switching fabric board according to claim 1, wherein the first switching fabric board and the second switching fabric board are a same switching fabric board.

3. The switching fabric board according to claim 2, wherein the first switching fabric board further comprises a second connector, and the second connector is connected to the first switching chip.

4. The switching fabric board according to claim 1, wherein the first switching fabric board and the second switching fabric board are different switching fabric boards.

5. The switching fabric board according to any one of claims 1 to 4, wherein the first switching fabric board further comprises a first forwarding module, the first connector is connected to the first forwarding module, and the first forwarding module is further connected to the first communication module based on the first signal cable.

6. The switching fabric board according to any one of claims 1 to 5, wherein the first switching fabric board further comprises a second switching chip and a third communication module, and the second switching chip has a data forwarding capability;
the second switching chip is connected to the third communication module based on a second signal cable; and
the third communication module is further configured to connect to a fourth communication module, the fourth communication module is connected to a third connector, and the fourth communication module and the third connector are configured on a third switching fabric board connected to a third network device.

7. The switching fabric board according to claim 6, wherein the third communication module is connected to the fourth communication module based on an optical fiber or a cable.

8. The switching fabric board according to claim 6 or 7, wherein the first switching fabric board further comprises a fourth connector, and the fourth connector is connected to the second switching chip based on a third signal cable.

9. The switching fabric board according to claim 8, wherein the first switching fabric board further comprises a second forwarding module, the fourth connector is connected to the second forwarding module, and the second forwarding module is connected to the second switching chip based on the third signal cable.

10. The switching fabric board according to any one of claims 1 to 9, wherein the first communication module is connected to the second communication module based on an optical fiber or a cable.

11. A data forwarding method, wherein the method is applied to the switching fabric board according to any one of claims 1 to 10, and the method comprises:
receiving first data by using a first connector, wherein the first connector is configured to connect to a first service fabric board;
sending, by using the first connector, the first data to a first communication module based on a first signal cable; and
sending the first data to a second communication module by using the first communication module, wherein the second communication module is configured to send the first data to a first switching chip, and the first switching chip has a data forwarding capability.

12. The method according to claim 11, wherein after the sending the first data to a second communication module by using the first communication module, the method further comprises:
sending the first data to the first switching chip by using the second communication module; and
forwarding the first data to a second connector by using the first switching chip, wherein the second connector is configured to connect to a second service fabric board.

13. The method according to claim 11 or 12, wherein the sending, by using the first connector, the first data to a first communication module based on a first signal cable comprises:
sending the first data to a first forwarding module by using the first connector; and
sending, by using the first forwarding module, the first data to the first communication module based on the first signal cable.

14. The method according to any one of claims 11 to 13, wherein the method further comprises:
receiving second data by using a second switching chip;
forwarding, by using the second switching chip, the second data to a third communication module based on a second signal cable; and
sending the second data to a fourth communication module by using the third communication module, wherein the fourth communication module is configured to send the second data to a third connector.

15. The method according to claim 14, wherein the receiving second data by using a second switching chip comprises:
receiving, by using the second switching chip, the second data that is sent by a fourth connector based on a third signal cable, wherein the fourth connector is configured to connect to a third service fabric board.

16. The method according to claim 15, wherein the receiving, by using the second switching chip, the second data that is sent by a fourth connector based on a third signal cable comprises:
receiving the second data sent by the fourth connector by using a third forwarding module; and
receiving, by using the second switching chip, the second data that is sent by the third forwarding module based on the third signal cable.

17. A switching subrack, wherein the switching subrack comprises at least one switching fabric board according to any one of claims 1 to 10.

18. A network system, wherein the network system comprises at least two network devices, and the at least two network devices are connected through the switching fabric board according to any one of claims 1 to 10.
